# FASCICULE DE BREVET EUROPEEN

(11) **EP 1 276 159 B1**
(45) Date de publication et mention de la délivrance du brevet: **12.09.2007**
(21) Numéro de dépôt: 02291682.9
(22) Date de dépôt: 05.07.2002
(51) Int. Cl.: H01L 41/04, F02D 41/20

(54) **Dispositif de commande d'un actuateur piezo-électrique et son procédé de mise en oeuvre**
Ansteuerschaltung für einen piezoelektrischen Aktuator sowie Betriebsverfahren
Driving circuit for a piezoelectric actuator and operation method thereof

(30) Priorité: 10.07.2001 FR 0109148
(43) Date de publication de la demande: 15.01.2003
(73) Titulaire: RENAULT s.a.s., 92100 Boulogne Billancourt (FR)
(72) Inventeur: Dal, Arnaud, 78000 Versailles (FR)

(56) Documents cités:
- GB-A- 2 198 604
- GB-A- 2 335 317

## Description

La présente invention concerne un dispositif de commande d'un actuateur piézo-électrique piloté électroniquement, et plus particulièrement d'un injecteur de carburant à étage piézo-électrique piloté par le calculateur d'injection électronique d'un moteur à combustion interne dans un véhicule automobile. Elle concerne également un procédé de mise en oeuvre dudit dispositif.

Un tel injecteur de carburant comporte un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalent, au premier ordre, à une capacité dont la tension de chargement est élevée, supérieure à une centaine de volts.

Dans un véhicule automobile, la tension d'alimentation a pour valeur 12 ou 42 volts, ce qui implique premièrement d'augmenter cette tension et deuxièmement d'assurer la charge et la décharge de la céramique.

Il existe actuellement plusieurs groupes de topologies de dispositif de commande pour injecteurs piézo-électriques. Un premier groupe concerne les topologies séparées en deux circuits, l'un étant un convertisseur-élévateur de tension en courant continu DC-DC alimenté par la basse tension de la batterie et l'autre étant une structure de chargement et de déchargement de la céramique. Une telle topologie est par exemple décrite dans la demande de brevet allemand publiée sous le No. DE 19827170, au nom de BOSCH.

Un deuxième groupe concerne les topologies regroupant dans un même circuit le convertisseur-élévateur de tension et la structure de chargement/déchargement, comme le décrit la demande de brevet américain publiée sous le No. US 5 986 360, au nom de SIEMENS. Une telle topologie permet d'utiliser des composants communs pour les deux fonctions, ce qui réduit le coût global du dispositif.

Actuellement, il existe un dispositif de commande d'un actionneur piézo-électrique, décrit dans la demande de brevet GB 2 198 604 A, qui comprend un convertisseur-élévateur de tension DC-DC composé de deux convertisseurs transmettant le courant dans deux directions opposées, réalisés chacun par une inductance reliée à un interrupteur, et reliés par une capacité. La charge de l'actionneur est réalisée par décharge de la capacité jouant le rôle d'accumulateur d'énergie et la décharge de l'actionneur se fait dans la capacité qui se recharge ainsi, pour ensuite se décharger dans la source de tension.

Le but de la présente invention est de proposer de nouvelles topologies assurant la charge des céramiques piézo-électriques, à travers une inductance pour constituer un circuit résonant.

Pour cela, un premier objet de l'invention est un dispositif de commande d'un actionneur piézo-électrique, piloté électroniquement à partir d'un calculateur de contrôle, comprenant un convertisseur-élévateur E de tension en courant continu alimenté par une source de tension continue, composé d'une part de deux ensembles constitués chacun d'une inductance L₁,L₂ reliée à un interrupteur S_{w1},S_{w2} monté en parallèle avec une diode D₁,D₂ de roue libre, et d'autre part d'une capacité C connectée entre les deux ensembles, aux points de jonction J₁,J₂ de l'inductance L₁ *du premier ensemble* et de l'interrupteur S_{w1} *du premier ensemble,* respectivement de l'inductance L₂ *du deuxième ensemble* et de l'interrupteur S_{w2}*du deuxième ensemble,* la diode D₁ du premier ensemble relié à la source de tension *continue* B étant montée en parallèle dans le sens passant du courant de décharge de l'actuateur piézo-électrique Pᵢ, la diode D₂ du second ensemble relié à l'actuateur piézo-électrique Pᵢ étant montée en parallèle dans le sens passant du courant de charge de l'actuateur piézo-électrique Pᵢ, *et en ce que d'une part la charge de l'actuateur piézo-électrique P₁ est réalisée indirectement par décharge de la* capacité *C jouant le rôle* d'accumulateur *d'énergie, qui est rechargée par la source de tension continue B, et d'autre part la décharge de l'actuateur piézo-électrique Pᵢ est réalisée indirectement dans la capacité C qu'elle recharge* ainsi, *qui* va *ensuite se décharger dans* la *source de tension continue B,*
caractérisé en ce que les deux inductances L₁ et L₂ du convertisseur-élévateur E de tension DC-DC sont couplées autour d'un seul noyau, une inductance L de faible valeur étant montée en série avec l'une des deux inductances L_{1'} L₂ pour lisser les courants.

Selon une autre caractéristique du dispositif de commande, la capacité C reliant les deux ensembles, formés chacun d'une inductance, d'un interrupteur et d'une diode, est divisée en deux capacités C₁ et C₂, en ce qu'un transformateur T est inséré entre ces deux capacités de sorte qu'une des bornes de l'enroulement primaire T₁ du transformateur est ainsi reliée à la capacité C₁, l'autre borne étant reliée à la masse, pendant qu'une des bornes de l'enroulement secondaire T₂ est reliée à l'autre capacité C₂ et son autre borne est reliée à la masse, en ce que les enroulements du primaire T₁ et du secondaire T₂ du transformateur sont couplés aux deux inductances L₁ et L₂ du convertisseur-élévateur E de tension DC-DC, une inductance L étant montée en série avec l'une des deux inductances L₁, L₂, et en ce que le rapport de transformation m entre les enroulements primaire et secondaire est déterminé pour ajuster la charge de l'actuateur piézo-électrique Pᵢ.

Selon une autre caractéristique de l'invention, dans le premier ensemble, l'interrupteur S_{w1} monté en parallèle avec la diode D₁ est relié à la borne positive de la source de tension B et l'inductance L₁ est connectée au point de jonction J₁ de l'interrupteur S_{w1} et de la capacité C d'une part et à la masse d'autre part, et en ce que l'interrupteur S_{w2} du second ensemble relié à l'actuateur est connecté au point de jonction J₂ de la capacité C et de l'inductance L₂ d'une part et à la masse d'autre part, avec la diode D₂ de roue libre, montée en parallèle dans le sens passant du courant de charge de l'actuateur piézo-électrique Pᵢ, et en ce que l'inductance L est montée en série avec l'inductance L₂.

Un second objet de l'invention est un procédé de mise en oeuvre du dispositif de commande, caractérisé en ce qu'il comporte :
au moins une séquence de charge de l'actuateur piézo-électrique Pᵢ au cours de laquelle l'interrupteur S_{w2} est bloqué et comprenant deux phases selon l'état de l'interrupteur S_{w1} :
   - la première phase, qui correspond à la fermeture de l'interrupteur S_{w1}, au cours de laquelle les deux capacités C₁ et C₂ se déchargent pour assurer la charge de l'actuateur Pᵢ;
   - la seconde phase, qui correspond à l'ouverture de l'interrupteur S_{w1}, au cours de laquelle les capacités C₁ et C₂ se chargent à partir de l'énergie emmagasinée dans l'inductance L₁ pendant que l'actuateur Pi continue à se charger grâce à l'énergie emmagasinée dans l'inductance L₂;
   et au moins une séquence de décharge au cours de laquelle l'interrupteur S_{w1} est ouvert et comprenant deux phases selon l'état de l'interrupteur S_{w2} :
   - la première phase, qui correspond à la fermeture de l'interrupteur S_{w2}, au cours de laquelle l'actuateur Pᵢ se décharge vers l'inductance L₂ et les capacités C₁ et C₂ se déchargent dans la *source de tension continue* B, la capacité C₁ se déchargeant à travers l'inductance L₁ et la capacité C₂ se déchargeant à travers le transformateur T ;
   - la seconde phase, qui correspond à l'ouverture de l'interrupteur S_{w2}, au cours de laquelle l'énergie accumulée précédemment dans l'inductance L₂ charge la capacité C₂, et aussi, à travers le transformateur T et la diode D₁, la capacité C₁, l'inductance L₁ déchargeant son énergie dans la *source de tension continue* B à travers la diode D₁.

D'autres caractéristiques et avantages de l'invention apparaîtront à la lecture de la description de plusieurs modes de réalisation d'un dispositif de commande d'un actionneur piézo-électrique, illustrée par les figures suivantes qui sont :
la figure 1 : le schéma électronique d'un premier mode de réalisation d'un dispositif de commande
les figures 2 et 3 : le schéma équivalent au circuit de charge de la céramique piézo-électrique, au cours de deux phases successives
les figures 4 et 5 : les variations temporelles de la tension de charge de l'actuateur piézo-électrique respectivement en une et en plusieurs étapes ;
les figures 6 et 7 : le schéma équivalent au circuit de décharge de la céramique piézo-électrique, au cours de deux phases successives
les figures 8, et 10 : le schéma électronique de différents modes de réalisation d'un dispositif de commande selon l'invention ; les figures 9, 11, 14, et 15 : le schéma électronique de différents modes de réalisation d'un dispositif de commande;
les figures 12 et 13 : le schéma équivalent au circuit de charge de la céramique piézo-électrique, au cours de deux phases successives selon l'invention, dans le mode de réalisation de la figure 11 ;
les figures 16 et 17 : le schéma équivalent au circuit de charge de la céramique piézo-électrique au cours de deux phases successives selon l'invention, dans le mode de réalisation de la figure 15.

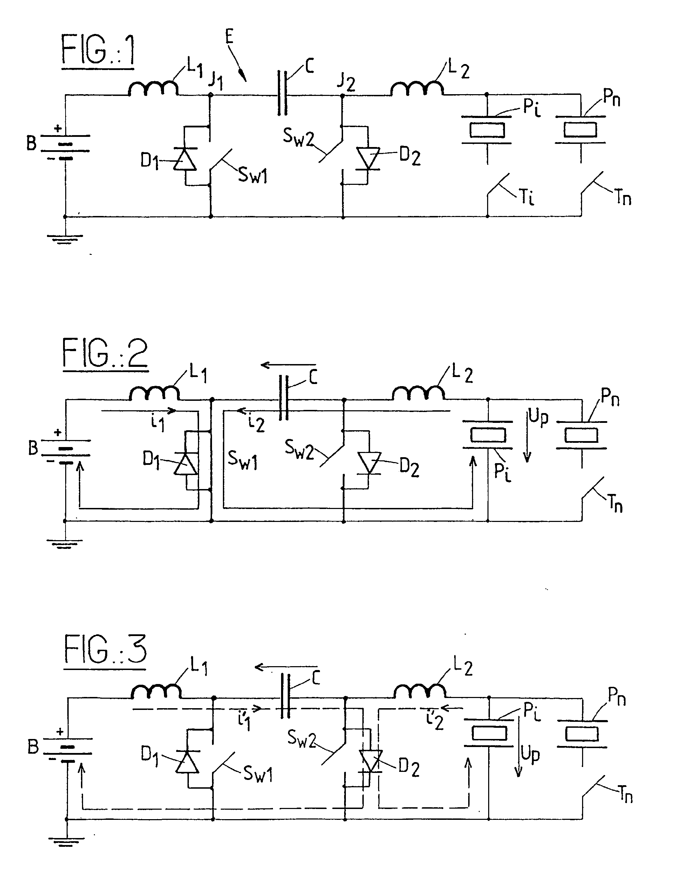

Les éléments portant les mêmes références sur les différentes figures remplissent les mêmes fonctions en vue des mêmes résultats. *La description des modes de réalisation représentés dans les figures 1-7, 9, 11-17 ne sont pas couverts par les revendications mais sont utiles à la compréhension de l'invention.*

Comme le montre le schéma de la figure 1, le dispositif de commande d'un actuateur piézo-électrique Pᵢ comporte une source de tension continue B - une batterie électrique par exemple -, dont la borne (-) est reliée à la masse et dont la borne (+) est reliée à un circuit convertisseur-élévateur de tension E dont la sortie haute tension est reliée aux bornes de la céramique piézo-électrique Pᵢ.

Comme un moteur thermique de véhicule automobile nécessite plusieurs injecteurs Pᵢ, i entier variant de 1 à n, le schéma représente plusieurs céramiques piézo-électriques P₁,..., Pᵢ,..., Pₙ qui sont montées en parallèle et choisies successivement grâce à l'interrupteur Tᵢ monté en série avec chacune d'elles. En fonction de l'injecteur piézo-électrique qui doit être ouvert pendant les intervalles d'activité pour assurer l'alimentation en carburant du cylindre correspondant du moteur, l'interrupteur Tᵢ est commandé par un signal logique en provenance du calculateur d'injection, pour que la sortie haute tension du convertisseur-élévateur soit connectée précisément à cet injecteur.

Le convertisseur-élévateur E de tension DC-DC est composé d'une part de deux ensembles constitués chacun d'une inductance L₁, respectivement L₂, reliée à un interrupteur S_{w1}, respectivement S_{w2}, monté en parallèle avec une diode de roue libre D₁, respectivement D₂, et d'autre part d'une capacité C connectée entre les deux ensembles. L'inductance L₁ est connectée à la borne (+) de la batterie B et l'inductance L₂ est connectée à l'actuateur Pᵢ. Quant à la capacité C, elle est plus précisément connectée d'un côté au point de jonction J₁ de l'inductance L₁ et d'une borne du premier interrupteur S_{w1}, dont la seconde borne est reliée à la masse, et de l'autre côté au point de jonction J₂ de l'inductance L₂ et d'une borne de l'interrupteur S_{w2}, dont la seconde borne est connectée à la masse. La diode D₁ de roue libre, montée en parallèle avec l'interrupteur S_{w1}, est dans le sens passant du courant de décharge de la céramique Pᵢ, et la diode D₂ de roue libre, montée en parallèle avec l'interrupteur S_{w2}, est dans le sens passant du courant de charge de la céramique Pᵢ.

Les deux interrupteurs S_{w1} et S_{w2} peuvent être par exemple des transistors MOS, ou bien des bipolaires à grilles isolées - IGBT - avec diode intégrée en parallèle, afin de réduire le nombre de composants. Dans ce cas de transistors MOS ou IGBT, les diodes D₁ et D₂ sont les diodes intrinsèques des interrupteurs S_{w1} et S_{w2} respectivement.

Le fonctionnement du dispositif de commande se décompose en deux séquences, l'une concernant la charge de l'actuateur piézo-électrique Pᵢ et l'autre sa décharge.

Pour réaliser le chargement de l'actuateur, équivalent à une capacité, l'interrupteur S_{w2} est commandé pour être ouvert. Comme le montre la figure 2, lors d'une première phase de charge, le signal de commande pilote la fermeture de l'interrupteur S_{w1} de telle sorte que, d'une part de l'énergie provenant de la batterie vient s'accumuler dans l'inductance L₁, par circulation d'un courant i₁ dans la première boucle constituée par la batterie B, l'inductance L₁ et l'interrupteur S_{w1} et que, d'autre part la capacité C initialement chargée se décharge dans la deuxième boucle, constituée par la capacité C, l'interrupteur S_{w1}, l'actuateur Pᵢ et l'inductance L₂, et charge ainsi l'actuateur Pᵢ grâce à un courant i₂.

Lors d'une seconde phase, l'ouverture de l'interrupteur S_{w1} est commandée afin que l'énergie accumulée dans l'inductance L₁, lors de la première phase, provoque la mise en conduction de la diode D₂ par le passage d'un courant i'₁ dans une troisième boucle de courant constituée de l'inductance L₁, de la capacité C, de la diode D₂ et de la batterie B. Ce courant i'₁ recharge ainsi la capacité C, comme le montre le schéma équivalent au circuit de décharge de la figure 3. De plus, l'actuateur Pᵢ peut continuer à se charger s'il reste du courant dans l'inductance L₂, grâce à la quatrième boucle de courant constituée par l'inductance L₂, la diode D₂ et l'actuateur Pᵢ.

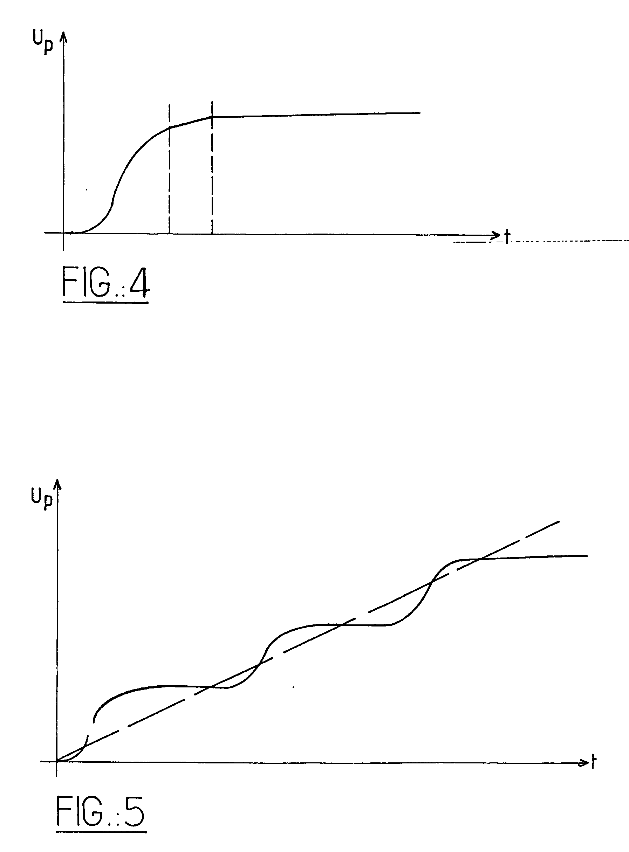

Le chargement de la céramique piézo-électrique Pᵢ peut s'effectuer en une fois comme le montre la figure 4 qui représente la tension Up aux bornes de Pᵢ en fonction du temps, ou bien en plusieurs étapes successives comme le montre la figure 5. La partie ascendante de chacune des deux courbes correspond à la première phase lorsque l'interrupteur S_{w1} est fermé et le palier correspond à la seconde phase lorsque ce même interrupteur est commandé à l'ouverture.

L'intérêt d'un chargement en plusieurs étapes est qu'il permet d'utiliser des composants de taille réduite et de faire varier la pente de chargement, approchant la courbe de la tension Up en phase de croissance.

L'injection de carburant a lieu ensuite dès que l'actuateur piézo-électrique a une tension supérieure à 200 volts, selon le type d'injecteur.

Pour réaliser la décharge de l'actuateur, l'interrupteur S_{w1} est maintenant commandé pour être ouvert pendant que le second interrupteur S_{w2} est commandé successivement à la fermeture puis à l'ouverture.

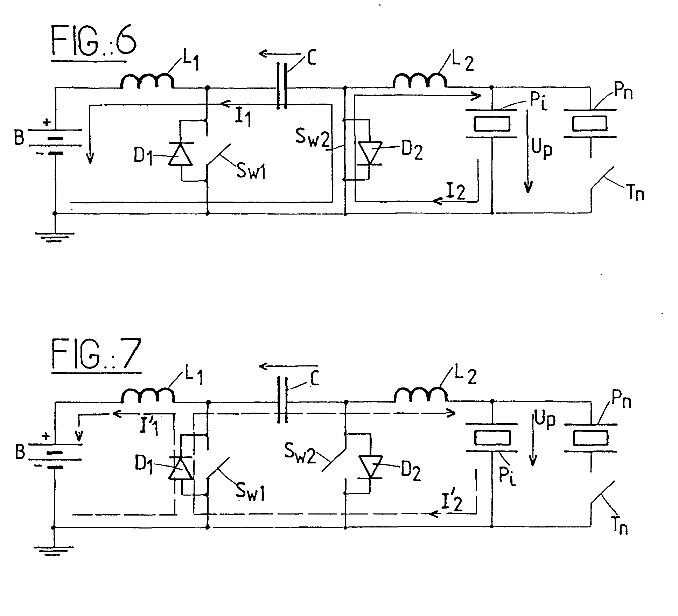

Dans une première phase, l'interrupteur S_{w2} est fermé de sorte qu'il y a un transfert d'énergie de l'actuateur piézo-électrique Pᵢ qui se décharge vers l'inductance L₂ créant un courant I₂ dans la deuxième boucle de courant décrite précédemment. Simultanément, la capacité C se décharge dans la batterie B à travers l'inductance L₁, créant un courant I₁ dans la première boucle de courant, comme le montre le schéma équivalent au circuit de décharge de l'actuateur sur la figure 6.

Lors d'une deuxième phase, l'interrupteur S_{w2} est ouvert afin que le courant l'₁ accumulé dans l'inductance L₁ force la conduction de la diode D₁ montée dans le sens passant, la batterie B continuant alors à se recharger. En même temps, la diode D₁ assure la continuité de la conduction du courant l'₂ dans l'inductance L₂, courant provenant de la décharge de l'actuateur Pᵢ qui continue à se décharger à travers la diode D₁, la capacité C, et l'inductance L₂, comme le montre le schéma de la figure 7. Ce courant assure la recharge de la capacité C. Dans cette deuxième phase, il y a transfert d'énergie de l'actuateur Pᵢ vers la capacité C et l'inductance L₂ par la mise en conduction de la diode D₁ de roue libre.

Comme pour la charge de l'actuateur, sa décharge peut s'effectuer en plusieurs paliers successifs qui permettent de contrôler la pente et de réduire la taille des composants, chaque palier correspondant à l'ouverture de l'interrupteur S_{w2}.

Ainsi, d'une part la charge de l'actuateur piézo-électrique Pᵢ est réalisée indirectement par décharge de la capacité C jouant le rôle d'accumulateur d'énergie, qui est rechargée par la source de tension B, et d'autre part la décharge de l'actuateur piézo-électrique Pᵢ est réalisée indirectement dans la capacité C qu'elle recharge ainsi, qui va ensuite se décharger dans la source de tension B. Le montage de ce dispositif de commande est réversible, ce qui limite le nombre de composants et donc le coût global de l'ensemble qui est alimenté par une batterie basse tension embarquée sur le véhicule, délivrant 12, 24 ou 42 volts.

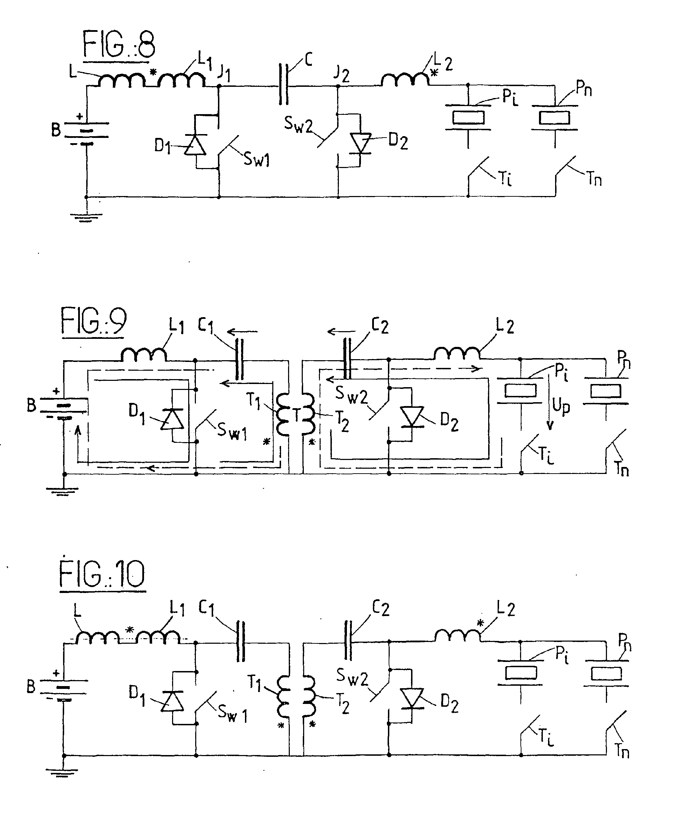

La figure 8 représente un premier mode de réalisation du dispositif de commande selon l'invention, dans lequel les deux inductances L₁ et L₂ sont couplées autour d'un seul noyau, le sens de leurs enroulements respectifs étant symbolisé par une étoile sur le schéma. Une inductance L de faible valeur, montée en série avec l'une d'elles, en l'occurrence L₁, contribue à lisser les courants. L'intérêt de ce mode de réalisation est qu'un seul noyau est nécessaire pour les deux inductances L₁ et L₂

La figure 9 est un autre mode de réalisation d'un dispositif de commande dans lequel est inséré un transformateur T afin d'assurer un isolement galvanique entre l'actuateur piézo-électrique et la source basse tension. Pour adapter au mieux la charge à la source, un transformateur est inséré en parallèle entre les deux interrupteurs S_{w1} et S_{w2} à condition de diviser la capacité C précédente, utilisée comme accumulateur d'énergie, en deux capacités C₁ et C₂, montées de part et d'autre du transformateur. Une des bornes de l'enroulement primaire T₁ est ainsi reliée à la capacité C₁, l'autre borne étant reliée à la masse, pendant qu'une des bornes de l'enroulement secondaire T₂ est reliée à l'autre capacité C₂ et son autre borne est reliée à la masse. Quand l'interrupteur S_{w1} est fermé, la capacité C₁ empêche de court-circuiter le primaire du transformateur. Le choix du rapport de transformation m entre les enroulements primaire et secondaire permet d'ajuster le chargement de l'actuateur piézo-électrique.

Selon le fonctionnement de ce mode de réalisation, la charge de la céramique piézo-électrique Pᵢ est réalisée en deux phases, l'interrupteur S_{w2} étant ouvert. Lors d'une première phase, l'interrupteur S_{w1} est fermé : l'inductance L₁ se charge, la tension de 12 volts aux bornes de la batterie B génère une tension supérieure, de l'ordre de 50 volts, aux bornes de l'enroulement primaire du transformateur T et les deux capacités C₁ et C₂ se déchargent, ce qui assure la charge de l'actuateur Pᵢ, comme le montre le sens des courants représentés en traits pleins. Lors de la seconde phase, l'interrupteur S_{w1} est ouvert, la capacité C₁ se charge et la capacité C₂ se charge par la diode D₂. L'inductance L₂ se décharge dans l'actuateur, comme le montre le sens des courants représentés en pointillés.

L'actuateur se décharge selon au moins une séquence de décharge au cours de laquelle l'interrupteur S_{w1} est ouvert et comprenant deux phases selon l'état de l'interrupteur S_{w2} :
- la première phase, qui correspond à la fermeture de l'interrupteur S_{w2}, au cours de laquelle l'actuateur P; se décharge vers l'inductance L₂ et les capacités C₁ et C₂ se déchargent dans la batterie B. La capacité C₁ se décharge à travers l'inductance L₁ et la capacité C₂ se décharge à travers le transformateur T.
- la seconde phase, qui correspond à l'ouverture de l'interrupteur S_{w2}, au cours de laquelle l'énergie accumulée précédemment dans l'inductance L₂ charge la capacité C₂, et aussi, à travers le transformateur T et la diode D₁, la capacité C₁. De plus, l'inductance L₁ décharge son énergie dans la batterie B à travers la diode D₁.

Une variante de ce mode de réalisation consiste à coupler les enroulements du transformateur T aux deux inductances L₁ et L₂, comme le montre la figure 10, pour n'utiliser qu'un seul circuit magnétique avec un seul noyau. Le sens des différents enroulements est mentionné par une étoile sur chacun d'eux. Comme pour le mode de réalisation représenté sur la figure 8, une inductance L de faible valeur est montée en série avec l'inductance L₁ ou L₂ pour lisser les courants, et n'est pas couplée aux autres enroulements.

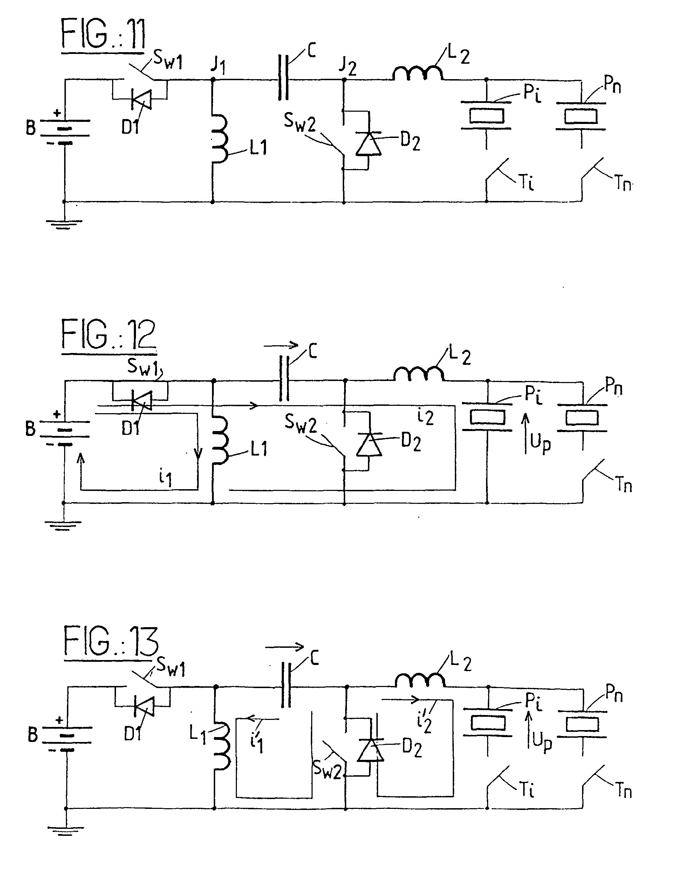

Un quatrième mode de réalisation, représenté sur la figure 11, réalise dans l'ensemble relié à la batterie B, une permutation de l'inductance L₁ avec l'interrupteur S_{w1} par rapport au premier mode de la figure 1. Dans le premier ensemble, l'interrupteur S_{w1} monté en parallèle avec la diode D₁ est relié à la borne positive de la source de tension B et l'inductance L₁ est connectée au point de jonction J₁ de l'interrupteur S_{w1} et de la capacité C d'une part et à la masse d'autre part, et l'interrupteur S_{w2} du second ensemble relié à l'actuateur est connecté au point de jonction J₂ de la capacité C et de l'inductance L₂ d'une part et à la masse d'autre part, avec la diode D₂ de roue libre, montée en parallèle dans le sens passant du courant de charge de l'actuateur piézo-électrique Pᵢ.

Le fonctionnement de la structure reste inchangé, par contre le sens de charge des actuateurs piézo-électriques Pᵢ et de la capacité C est inversé, comme le montrent les figures 12 et 13, relatives aux deux phases de charge des actuateurs. Lors de la première phase (figure 12), quand l'interrupteur S_{w1} est fermé, l'énergie s'accumule dans l'inductance L₁ grâce au courant i₁ circulant dans la première boucle à partir de la batterie, pendant que la capacité C, initialement chargée, se décharge vers l'actuateur piézo-électrique Pᵢ grâce à un courant i₂ passant par l'inductance L₂. Lors de la seconde phase (figure13), l'interrupteur S_{w1} est ouvert, l'énergie accumulée dans l'inductance L₁ met en conduction la diode D₂ et recharge la capacité C par un courant i'₁, et l'actuateur piézo-électrique Pᵢ continue à se charger grâce à la continuité du courant i'₂ dans l'inductance L₂ assurée par la diode D₂.

Le mode de réalisation suivant combine la permutation de l'inductance L_{1'} la plus proche de la batterie B, avec le premier interrupteur S_{w1} , et le couplage des inductances L₁ et L₂ autour d'un même noyau magnétique, une inductance L de faible valeur, pour lisser les courants, étant montée en série avec l'inductance L₂ reliée à l'actuateur piézo-électrique Pᵢ par exemple, comme le montre le schéma de la figure 14.

Quant au dernier mode de réalisation, représenté sur la figure 15, il combine l'insertion d'un transformateur T en parallèle entre les deux interrupteurs S_{w1} et S_{w2} avec la permutation de l'inductance L₁, la plus proche de la batterie B, avec le premier interrupteur S_{w1}, à condition de diviser la capacité C précédente en deux capacités C₁ et C₂, montées de part et d'autre du transformateur. Une des bornes du primaire T₁ est ainsi reliée à la capacité C₁, l'autre borne étant reliée à la masse, pendant qu'une des bornes du secondaire T₂ est reliée à l'autre capacité C₂ et son autre borne est reliée à la masse. Il est possible de combiner en plus le couplage des inductances L₁ et L₂ autour d'un même noyau magnétique, une inductance L de faible valeur étant montée en série avec l'inductance L₂ reliée à l'actuateur piézo-électrique Pᵢ.

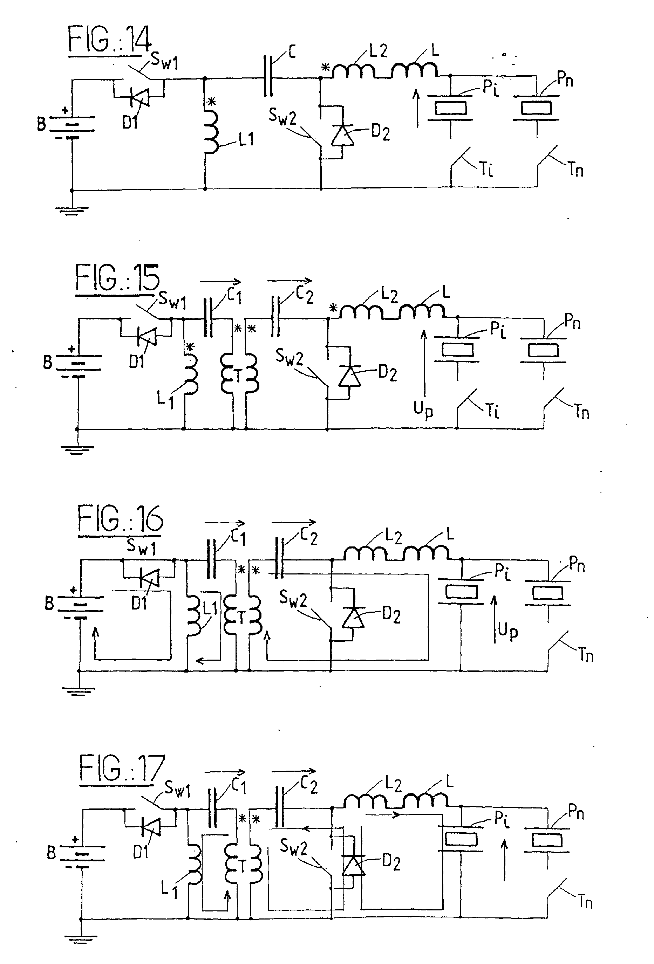

La figure 16 représente le schéma équivalent au circuit de charge de la céramique piézo-électrique, au cours de la première de deux phases successives de charge. L'interrupteur S_{w1} étant fermé, l'inductance L₁ se charge, pendant que les deux capacités C₁ et C₂ se déchargent. Ainsi, l'actuateur se charge à travers l'inductance L₂. Au cours de la seconde phase de charge (figure 17), l'interrupteur S_{w1} est commandé à l'ouverture de sorte que, d'une part la capacité C₁ se charge grâce à l'énergie emmagasinée dans l'inductance L₁, et d'autre part la capacité C₂ se charge par la diode D₂ devenue passante et l'inductance L₂ se décharge à travers l'actuateur piézo-électrique qui continue ainsi à se charger.

Le dispositif selon l'invention présente l'avantage d'être constitué d'un nombre très limité de composants, ce qui réduit à la fois son coût global et son encombrement. Un autre avantage intéressant est lié au chargement de l'actuateur sous des tensions réglables, avec possibilité de contrôler les pentes de chargement et de déchargement. De plus, cette structure est réversible, assurant tant le chargement que le déchargement de l'actuateur.

## Revendications

1. Dispositif de commande d'un actionneur piézo-électrique, piloté électroniquement à partir d'un calculateur de contrôle, comprenant un convertisseur-élévateur E de tension en courant continu alimenté par une source de tension continue B, composé d'une part de deux ensembles constitués chacun d'une inductance L₁,L₂ reliée à un interrupteur S_{w1},S_{w2} monté en parallèle avec une diode D₁ ,D₂ de roue libre, et d'autre part d'une capacité C connectée entre les deux ensembles, aux points de jonction J₁,J₂ de l'inductance L₁*du premier ensemble* et de l'interrupteur S_{w1}*du premier ensemble,* respectivement de l'inductance L₂ *du deuxième ensemble* et de l'interrupteur S_{w2}*du deuxième ensemble,* la diode D₁ du premier ensemble relié à la source de tension continue B étant montée en parallèle dans le sens passant du courant de décharge de l'actuateur piézo-électrique Pᵢ, la diode D₂ du second ensemble relié à l'actuateur piézo-électrique Pᵢ étant montée en parallèle dans le sens passant du courant de charge de l'actuateur piézo-électrique Pᵢ, *et en ce que d'une part la charge de l'actuateur piézo-électrique Pᵢ est réalisée indirectement par décharge de la capacité C jouant le rôle d'accumulateur d'énergie, qui est rechargée par la source de tension continue B, et d'autre part la décharge de l'actuateur piézo-électrique Pᵢ est réalisée indirectement dans la capacité C qu'elle* recharge ainsi, qui va ensuite se décharger dans la source de tension *continue B,*
**caractérisé en ce que** les deux inductances L₁ et L₂ du convertisseur-élévateur E de tension DC-DC sont couplées autour d'un seul noyau, une inductance L de faible valeur étant montée en série avec l'une des deux inductances L_{1'} L₂ pour lisser les courants.

2. Dispositif de commande selon la revendication 1, **caractérisé en ce que** la capacité C reliant les deux ensembles, formés chacun d'une inductance, d'un interrupteur et d'une diode, est divisée en deux capacités C₁ et C₂, **en ce qu'**un transformateur T est inséré entre ces deux capacités de sorte qu'une des bornes de l'enroulement primaire T₁ du transformateur est ainsi reliée à la capacité C₁, l'autre borne étant reliée à la masse, pendant qu'une des bornes de l'enroulement secondaire T₂ est reliée à l'autre capacité C₂ et son autre borne est reliée à la masse, **en ce que** les enroulements du primaire T₁ et du secondaire T₂ du transformateur sont couplés aux deux inductances L₁ et L₂ du convertisseur-élévateur E de tension DC-DC, une inductance L étant montée en série avec l'une des deux inductances L₁, L₂, et **en ce que** le rapport de transformation m entre les enroulements primaire et secondaire est déterminé pour ajuster la charge de l'actuateur piézo-électrique Pᵢ.

3. Dispositif de commande selon l'une des revendications 1 ou 2, **caractérisé en ce que**, dans le premier ensemble, l'interrupteur S_{w1} monté en parallèle avec la diode D₁ est relié à la borne positive de la source de tension continue B et l'inductance L₁ est connectée au point de jonction J₁ de l'interrupteur S_{w1} et de la capacité C d'une part et à la masse d'autre part, et **en ce que** l'interrupteur S_{w2} du second ensemble relié à l'actuateur est connecté au point de jonction J₂ de la capacité C et de l'inductance L₂ d'une part et à la masse d'autre part, avec la diode D₂ de roue libre, montée en parallèle dans le sens passant du courant de charge de l'actuateur piézo-électrique Pᵢ, et **en ce que** l'inductance L est montée en série avec l'inductance L₂.

4. Procédé de mise en oeuvre du dispositif selon les revendications 2 et 3, **caractérisé en ce qu'**il comporte :
au moins une séquence de charge de l'actuateur piézo-électrique Pᵢ au cours de laquelle l'interrupteur S_{w2} est bloqué et comprenant deux phases selon l'état de l'interrupteur Sw₁ :
- la première phase, qui correspond à la fermeture de l'interrupteur S_{w1}, au cours de laquelle les deux capacités C₁ et C₂ se déchargent pour assurer la charge de l'actuateur Pᵢ;
- la seconde phase, qui correspond à l'ouverture de l'interrupteur S_{w1}, au cours de laquelle les capacités C₁ et C₂ se chargent à partir de l'énergie emmagasinée dans l'inductance L₁ pendant que l'actuateur Pᵢ continue à se charger grâce à l'énergie emmagasinée dans l'inductance L₂;
et au moins une séquence de décharge au cours de laquelle l'interrupteur S_{w1} est ouvert et comprenant deux phases selon l'état de l'interrupteur S_{w2} :
- la première phase, qui correspond à la fermeture de l'interrupteur S_{w2}, au cours de laquelle l'actuateur Pᵢ se décharge vers l'inductance L₂ et les capacités C₁ et C₂ se déchargent dans la ***source de tension continue* B,** la capacité C₁ se déchargeant à travers l'inductance L₁ et la capacité C₂ se déchargeant à travers le transformateur T ;
- la seconde phase, qui correspond à l'ouverture de l'interrupteur S_{w2}, au cours de laquelle l'énergie accumulée précédemment dans l'inductance L₂ charge la capacité C₂, et aussi, à travers le transformateur T et la diode D_{1'} la capacité C₁, l'inductance L₁ déchargeant son énergie dans *la source de tension continue* B à travers la diode D₁.

## Claims

1. Device for driving a piezo-electric actuator, electronically controlled from a control processor, comprising a DC-DC step-up voltage converter E supplied by a DC voltage source B, composed, on the one hand, of two assemblies each formed from an inductor L₁, L₂ connected to a switch S_{w1}, S_{w2} mounted in parallel with a flywheel diode D₁, D₂ and, on the other, of a capacitor C connected between the two assemblies, to the junction points J₁, J₂ of the inductor L₁ of the first assembly and the switch S_{w1} of the first assembly, and of the inductor L₂ of the second assembly and the switch S_{w2} of the second assembly, respectively, the diode D₁ of the first assembly connected to the DC voltage source B being mounted in parallel forward-biased with respect to the discharge current of the piezo-electric actuator Pᵢ, the diode D₂ of the second assembly connected to the piezo-electric actuator Pᵢ being mounted in parallel forward-biased with respect to the charge current of the piezo-electric actuator Pᵢ, and in that, on the one hand, the charging of the piezo-electric actuator Pᵢ is indirectly effected by discharge of the capacitor C playing the role of energy accumulator, which is recharged by the DC voltage source B, and, on the other, the discharge of the piezo-electric actuator Pᵢ is indirectly effected into the capacitor C that it thus recharges, which will subsequently be discharged into the DC voltage source B,
**characterized in that** the two inductors L₁ and L₂ of the DC-DC step-up voltage converter E are coupled around a single core, an inductor L of low value being connected in series with one of the two inductors L₁, L₂ in order to smooth the currents.

2. Driver device according to Claim 1, **characterized in that** the capacitor C connecting the two assemblies, each formed from an inductor, a switch and a diode, is divided into two capacitors C₁ and C₂, **in that** a transformer T is inserted between these two capacitors in such a manner that one of the terminals of the primary winding T₁ of the transformer is thus connected to the capacitor C₁, the other terminal being connected to ground, while one of the terminals of the secondary winding T₂ is connected to the other capacitor C₂ and its other terminal is connected to ground, **in that** the windings of the primary T₁ and of the secondary T₂ of the transformer are coupled to the two inductors L₁ and L₂ of the DC-DC step-up voltage converter E, an inductor L being connected in series with one of the two inductors L₁, L₂, and **in that** the transformation ratio m between the primary and secondary windings is determined in order to adjust the charging of the piezo-electric actuator Pᵢ.

3. Driver device according to either of Claims 1 and 2, **characterized in that**, in the first assembly, the switch S_{w1}, mounted in parallel with the diode D₁, is connected to the positive terminal of the DC voltage source B and the inductor L₁ is connected to the junction point J₁ of the switch S_{w1} and the capacitor C, on the one hand, and to ground on the other, and **in that** the switch S_{w2} of the second assembly connected to the actuator is connected to the junction point J₂ of the capacitor C and the inductor L₂, on the one hand, and to ground on the other, with the flywheel diode D₂ mounted in parallel forward-biased with respect to the charge current of the piezo-electric actuator Pᵢ, and **in that** the inductor L is mounted in series with the inductor L₂.

4. Method for implementing the device according to Claims 2 and 3, **characterized in that** it comprises:
at least one charging sequence for the piezo-electric actuator Pᵢ during which the switch S_{w2} is turned off and comprising two phases depending on the state of the switch S_{w1}:
- the first phase, which corresponds to the closing of the switch S_{w1}, during which the two capacitors C₁ and C₂ discharge in order to effect the charging of the actuator Pᵢ;
- the second phase, which corresponds to the opening of the switch S_{w1}, during which the capacitors C₁ and C₂ charge up from the energy stored in the inductor L₁ while the actuator Pᵢ continues to charge thanks to the energy stored in the inductor L₂;
and at least one discharge sequence during which the switch S_{w1} is open and comprising two phases depending on the state of the switch S_{w2}:
- the first phase, which corresponds to the closing of the switch S_{w2}, during which the actuator Pᵢ discharges towards the inductor L₂ and the capacitors C₁ and C₂ discharge into the DC voltage source B, the capacitor C₁ discharging through the inductor L₁ and the capacitor C₂ discharging through the transformer T;
- the second phase, which corresponds to the opening of the switch S_{w2}, during which the energy previously accumulated in the inductor L₂ charges the capacitor C₂, and also, through the transformer T and the diode D₁, the capacitor C₁, the inductor L₁ discharging its energy into the DC voltage source B through the diode D₁.

## Patentansprüche

1. Steuervorrichtung für einen piezoelektrischen Aktuator, der von einem Steuerrechner aus elektronisch angesteuert wird, umfassend einen Gleichspannungs-Hochsetzsteller E, der von einer Gleichspannungsquelle B gespeist wird und einerseits aus zwei Gruppen von jeweils einer Drosselspule L₁, L₂, die mit einem Schalter S_{w1}, S_{w2} verbunden ist, der mit einer Freilaufdiode D₁, D₂ parallel geschaltet ist, und andererseits aus einer Kapazität C, die zwischen den beiden Gruppen an den Anschlusspunkten J₁, J₂ der Drosselspule L₁ der ersten Gruppe und des Schalters S_{w1} der ersten Gruppe bzw. der Drosselspule L₂ der zweiten Gruppe und des Schalters S_{w2} der zweiten Gruppe angeschlossen ist, besteht, wobei die Diode D₁ der ersten Gruppe, die mit der Gleichspannungsquelle B verbunden ist, in Durchlassrichtung des Entladestroms des piezoelektrischen Aktuators P₁ parallel geschaltet ist, wobei die Diode D₂ der zweiten Gruppe, die mit dem piezoelektrischen Aktuator P₁ verbunden ist, in Durchlassrichtung des Ladestroms des piezoelektrischen Aktuators P₁ parallel geschaltet ist, und dass einerseits das Laden des piezoelektrischen Aktuators P₁ indirekt durch Entladen der Kapazität C erfolgt, die als Energiespeicher fungiert und durch die Gleichspannungsquelle B wieder aufgeladen wird, und andererseits das Entladen des piezoelektrischen Aktuators P₁ indirekt in der Kapazität C erfolgt, die er somit wieder auflädt und die sich anschließend in die Gleichspannungsquelle B entlädt,
**dadurch gekennzeichnet, dass** die beiden Drosselspulen L₁ und L₂ des Gleichspannungs-Hochsetzstellers E um einen einzigen Kern gekoppelt sind, wobei eine niederwertige Drosselspule L mit einer der beiden Drosselspulen L₁, L₂ in Reihe geschaltet ist, um die Ströme zu schlichten.

2. Steuervorrichtung nach Anspruch 1, **dadurch gekennzeichnet, dass** die Kapazität C, welche die beiden Gruppen verbindet, die jeweils aus einer Drosselspule, einem Schalter und einer Diode gebildet werden, in zwei Kapazitäten C₁ und C₂ unterteilt ist, dass ein Transformator T zwischen diesen beiden Kapazitäten eingefügt ist, so dass eine der Klemmen der Primärwindung T₁ des Transformators somit mit der Kapazität C₁ verbunden ist, wobei die andere Klemme mit Masse verbunden ist, während eine der Klemmen der Sekundärwindung T₂ mit der anderen Kapazität C₂ verbunden ist und ihre andere Klemme mit Masse verbunden ist, dass die Primärwindung T₁ und die Sekundärwindung T₂ des Transformators an die beiden Drosselspulen L₁ und L₂ des Gleichspannungs-Hochsetzstellers E gekoppelt sind, wobei eine Drosselspule L mit der anderen der beiden Drosselspulen L₁, L₂ in Reihe geschaltet ist, und dass die Stromübersetzung m zwischen den Primär- und Sekundärwindungen festgelegt ist, um die Ladung des piezoelektrischen Aktuators P₁ einzustellen.

3. Steuervorrichtung nach einem der Ansprüche 1 oder 2, **dadurch gekennzeichnet, dass** in der ersten Gruppe der mit der Diode D₁ parallel geschaltete Schalter S_{w1} mit der positiven Klemme der Gleichspannungsquelle B verbunden ist, und die Drosselspule L₁ einerseits am Verbindungspunkt J₁ des Schalters S_{w1} und der Kapazität C und andererseits an Masse angeschlossen ist, und dass der mit dem Aktuator verbundene Schalter S_{w2} der zweiten Gruppe einerseits an den Verbindungspunkt J₂ der Kapazität C und der Drosselspule L₂ und andererseits an Masse angeschlossen ist, zusammen mit der Freilaufdiode D₂, die in Durchlassrichtung des Ladestroms des piezoelektrischen Aktuators P₁ parallel geschaltet ist, und dass die Drosselspule L mit der Drosselspule L₂ in Reihe geschaltet ist.

4. Verfahren zum Betrieb der Vorrichtung nach Anspruch 2 und 3, **dadurch gekennzeichnet dass** es folgendes umfasst:
mindestens eine Ladesequenz des piezoelektrischen Aktuators P₁, während der der Schalter S_{w2} blockiert ist und die zwei Phasen gemäß dem Zustand des Schalters S_{w1} umfasst:
- die erste Phase, die dem Schließen des Schalters S_{w1} entspricht, während der die beiden Kapazitäten C₁ und C₂ sich entladen, um das Laden des Aktuators P₁ sicherzustellen;
- die zweite Phase, die dem Öffnen des Schalters S_{w1} entspricht, während der die Kapazitäten C₁ und C₂ sich von der in der Drosselspule L₁ gespeicherten Energie aus aufladen, während der Aktuator P₁ sich weiter durch die in der Drosselspule L₂ gespeicherte Energie auflädt;
und mindestens eine Entladesequenz, während der der Schalter S_{w1} offen ist und die zwei Phasen gemäß dem Zustand des Schalters S_{w2} umfasst:
- die erste Phase, die dem Schließen des Schalters S_{w2} entspricht, während der der Aktuator P₁ sich zur Drosselspule L₂ entlädt und die Kapazitäten C₁ und C₂ sich in die Gleichspannungsquelle B entladen, wobei die Kapazität C₁ sich über die Drosselspule L₁ entlädt und die Kapazität C₂ sich über den Transformator T entlädt;
- die zweite Phase, die dem Öffnen des Schalters S_{w2} entspricht, während der die sich zuvor in der Drosselspule L₂ angesammelte Energie die Kapazität C₂ sowie über den Transformator T und die Diode D₁ die Kapazität C₁ auflädt, wobei die Drosselspule L₁ ihre Energie in die Gleichspannungsquelle B über die Diode D₁ entlädt.
